# EUROPEAN PATENT APPLICATION

(11) **EP 3 557 550 A1**
(43) Date of publication of application: **23.10.2019**
(21) Application number: 19169191.4
(22) Date of filing: 15.04.2019
(51) Int. Cl.: G08B 21/22, G08B 21/24, B60N 2/00

(54) **CAR ANTI-ABANDONMENT SYSTEM**

(30) Priority: 16.04.2018 IT 201800004531
(71) Applicant: Facondo, Giovanni, 87064 Corigliano Calabro (CS) (IT)
(72) Inventor: Facondo, Giovanni, 87064 Corigliano Calabro (CS) (IT)
(74) Representative: Scorza, Federica

(57) **Abstract**

A car anti-abandonment system (100) comprising:
a control unit (101) configured to activate and deactivate an indoor alarm signal; a first detection device (102) placed on a child car seat (104) configured to detect the presence of a child in the car and to send a first signal to the control unit (101); and a second detection device (103) configured to detect the presence of a driver and to send a second signal to the control unit (101).

The control unit (101) is provided with a light indicator which is activated in the event of a malfunction of the cigarette lighter.

## Description

The present invention relates to a car anti-abandonment system.

In particular, the present invention relates to a car anti-abandonment system of the type installed on a car for detecting the presence of a child in the passenger car, in hazardous conditions.

It is known the problem of occasional distraction is that leads adults to forget their children in the car with dramatic consequences. Lack of sleep, fatigue, stress or variations in daily routine can affect the behavior of even the most caring and attentive parent. In fact, to forget a child in a car is extremely dangerous, since in a cockpit inflamed by the sun and high temperatures it takes just 20 minutes to reach 50 degrees and bring a child to die of dehydration and hyperthermia. The dramatic figure is that from 1998 to the present, over 600 victims are estimated.

And there are various systems and devices that can detect the presence of a child in the car and alert the driver, so that the driver does not stray from the vehicle and forget about the child.

Some anti-abandonment systems for cars consist in pillows, equipped with weight sensors, which can be applied on an existing car seat. However, such known pillows are configured as separated devices, not integrated in a detection system, also not connected to the car power network, that only indicate the detection of the presence or not of the child in the car seat.

Other anti-abandonment systems, however, are integrated into the car and link the seat of the child with the driver's seat. This is done using seats already present in the car and installing appropriate sensors in the driver's seat, through consistent installation and configuration work.

A solution is described in the patent application US2017/116839 which reports a device which detects a child presence in a car seat and communicates an audible and mobile-device reminder to the driver that a child occupant is in the seat is disclosed. The system utilizes internal sensors to monitor various vehicle occupancy conditions to determine when a triggering event has occurred while the car seat occupancy sensor is engaged. Once triggered, the system will immediately notify the driver that the child remains in the car seat inside the vehicle, and will also sent follow-up alerts.

A second solution is described in the patent application WO2018/042395, referring of a new kid alarm device suited to signal the presence of a child sitting on a child car seat applicable to motor vehicles equipped with one proximity sensor in two parts, at least one sensor to detect the presence of a seated adult with at least one REED switch applied at least to the driver's safety belt to detect the presence of a seated adult and wherein if no sensor detects the presence of an adult or if the driver's and the front passenger's safety belts equipped with a REED switch are unlatched, so the electro-acoustic alarm is activated.

The object of the present invention is to provide a car anti-abandonment system that is integrated but at the same time practical, efficient and low cost and having, therefore, the characteristics such as to overcome the limitations of current systems.

According to the present invention, a car anti-abandonment system is provided, as defined in claim 1.

For a better understanding of the present invention, a preferred embodiment is now described, purely by way of non-limiting example, with reference to the attached drawings, in which:
- figure 1 shows a general block diagram of a car anti-abandonment system, according to the invention;
- figure 2 shows a pillow comprised in a first embodiment of the car anti-abandonment system, according to the invention;
- figure 3 shows a safety belt hook of the first embodiment of the car anti-abandonment system, according to the invention;
- figure 4 shows an embodiment of the control unit of the car anti-abandonment system, according to the invention;
- figure 5 shows the pillow, the hook and the control unit of figures 2-4, according to the invention.

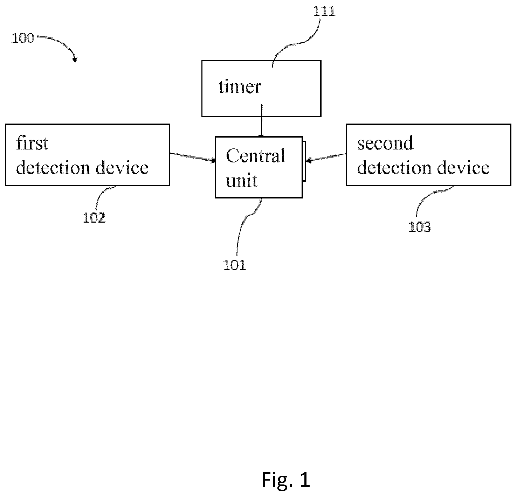

With particular reference to Figure 1, the car anti-abandonment system 100 comprises a control unit 101, a first detection device 102, communicating with the control unit 101, configured to detect the presence of a child on board and to send a first signal of the presence child on a child car seat 104 to the control unit 101, and a second detection device 103, communicating with the control unit 101, configured to detect the presence of a driver and to send a second signal of the presence of the driver to the control unit 101.

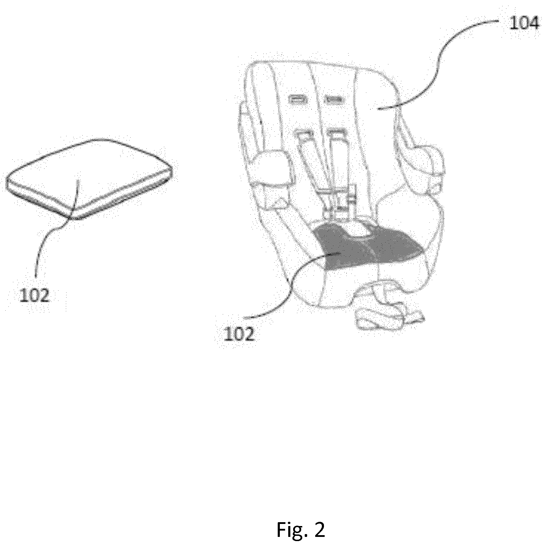

As shown in figure 2, according to an embodiment of the invention, the first detection device 102 is a cushion, which can be positioned on the seat 104 for children, or a shuttle or any other system suitable for the transport of children by car.

According to an aspect of the invention, the cushion 102 is equipped with a plurality of sensors that detect the presence of the child.

According to an aspect of the invention, the cushion 102 comprises only a seat or a seat and a backrest, and has an ergonomic shape.

Advantageously according to the invention, the cushion 102 is removable and replaceable with similar other cushion of the same type.

Advantageously, the cushion 102 is simply resting on the car seat, therefore it can be easily positioned.

According to an aspect of the invention, the plurality of sensors of the cushion 102 is a plurality of weight sensors.

In another embodiment, the first detection device 102 is a device integrated in the car seat 104 for children and configured to detect the body heat.

In a further embodiment, the first detection device 102 is an ultrasonic detector integrated in the car seat 104 for children.

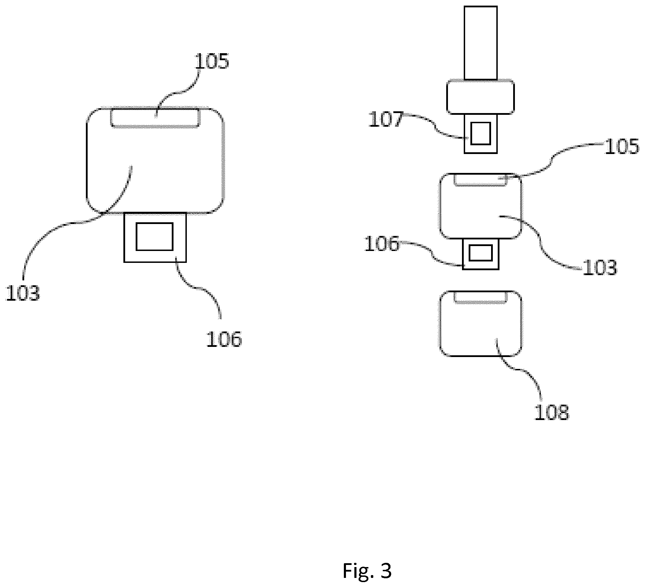

With reference to Figure 3, a first embodiment of the invention the second detection device 103 of the presence of a driver is shown.

According to the first embodiment of the invention, the second detection device 103 is a hook 103 for a car safety belt suitably installed.

According to an aspect of the invention, the hook 103 for car safety belts is equipped with a plurality of sensors, an anchorage compartment 105 and a closing tab 106.

The hook 103 for safety belt for car can be installed by inserting the closing tab 106 into the dedicated housing of the car anchoring system 108 and is arranged to let the latch plate of the safety belt 107 be inserted through its own anchorage compartment 105.

Advantageously according to the invention, the car hook 103 is easy to install and is universal for all types of cars.

According to another embodiment, the second sensing device 103 is a cushion provided with sensors, positioned on the driver's seat.

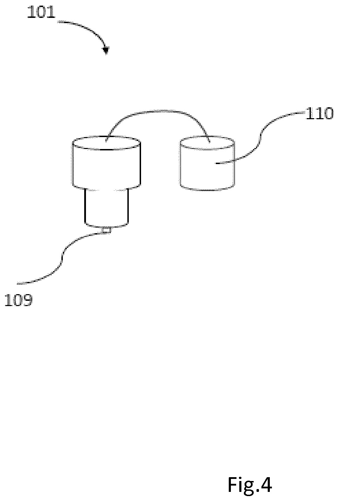

With reference to figure 4, a control unit 101 is shown.

According to an aspect of the invention, the control unit 101 is equipped with a light indicator and an audible alarm, which can be deactivated manually for a predefined time, using the appropriate button.

Advantageously according to the invention, the luminous signal emitted by the control unit 101 makes the anti-abandonment device 100 for cars usable even by deaf users.

According to an aspect of the invention, the control unit 101 is configured to receive the first child presence signal on the seat 104, from the first detection device 102, and to activate an internal alarm signal, consisting of the activation of the warning light and of the acoustic alarm of the control unit 101.

According to an aspect of the invention, the control unit 101 is connected to a digital timer 111 which is activated when a predetermined time interval Δt is exceeded, being Δt comprised, preferably between 2 and 5 minutes, starting from the instant of activation of the internal alarm signal. When the signal sent by the digital timer 111 is received, the control unit 101 activates an external alarm signal which consists in activating the alarm system installed in the car.

According to a further aspect of the invention, the digital timer 111 comprises a communication system for sending or requesting help in the form of calls forwarded to appropriately pre-configured telephone numbers, that starts after a time interval Δt from the activation of the internal alarm signal.

Advantageously according to the invention, the connection of the control unit 101 to the digital timer 111 makes it possible to make the anti-abandonment system 100 for cars even more effective.

According to an aspect of the invention, the control unit 101 is powered from the cigarette lighter present in the car via the appropriate connecting means 109.

According to an aspect of the invention, the control unit 101 is powered by an autonomous battery.

Advantageously according to the invention, the battery makes the power supply of the control unit 101 autonomous and allows the control unit 101 and the whole system 100 to operate even in the event of a malfunction of the cigarette lighter.

According to another aspect of the invention, the control unit 101 is equipped with a luminous indicator which lights up in the event of the cigarette lighter malfunctioning.

According to an aspect of the invention, the control unit 101 is also able to be supplied by a solar panel installed on the car and provided with a luminous LED.

According to an aspect of the invention, the digital timer 111, after the time interval Δt has elapsed, activates the luminous LED of the solar panel supplying the control unit 101 visible from the outside, so as to have a further danger signal.

According to an aspect of the invention, the control unit 101 is provided with a compartment 110.

Advantageously according to the invention, said compartment 110 has the functions of the cigarette lighter of the car and can also be used while the control unit 101 is connected.

According to an aspect of the invention, the control unit 101 is provided with a diode which allows the current to enter the control unit 101 but not to exit.

The diode advantageously allows to protect the control unit 101 from any damage caused by the malfunctioning of the car's electrical system.

According to a further aspect of the invention, the control unit 101 connects and supplies the first detection device 102 and the second detection device 103.

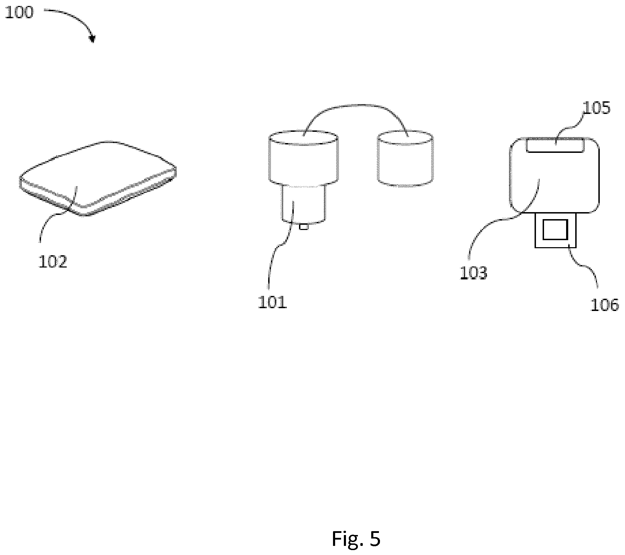

With reference to Figure 5, a first embodiment of the car anti-abandonment system 100 according to the invention, of which the operation is described below.

The car anti-abandonment system 100 starts working as soon as the child is placed in the seat. With the child sitting on the seat, detected by the plurality of sensors of the cushion 102, the control unit 101 activates an audible and visual signal, which turns off the locking of the driver's seat belt, detected by the plurality of sensors for car compartment 103. When no presence of a driver is detected, since the engine is switched off and the safety belt is released, the acoustic and luminous signals are activated, signaling the presence of the child in the car. According to particular needs, such as do not wake the child if he is asleep, the acoustic signal can be deactivated for a predefined time by means of an appropriate button.

Advantageously the manual deactivation of the acoustic signal is temporary, the acoustic signal is then automatically reactivated after a predetermined time.

In another possible embodiment, the cars anti-abandonment system 100 is equipped with the digital timer 111, which controls the time elapsed from the activation of the acoustic and luminous signal by the control unit 101. In particular, if a predetermined time interval Δt is exceeded from the activation of the acoustic and luminous signal, without it being deactivated by detecting the presence of the driver or by manual deactivation, the control unit 101 activates the car alarm. Furthermore, the control unit 101 activates the light led of the solar power panel and sends emergency requests to appropriately pre-configured telephone numbers.

Advantageously, the activation of additional danger signals after a predetermined time, allows for a further action of the event, however remote alarm, in which the driver does not pay attention to the first acoustic and luminous alarm signal.

Advantageously according to the invention, the car anti-abandonment system according to the invention is integrated and at the same time easy to install, practical, effective and economical.

Finally, it's clear that the car anti-abandonment system according to the invention here described and illustrated, modifications and variations may be made without departing from the scope of the present invention, as defined in the appended claims.

## Claims

1. A car anti-abandonment system (100) comprising:
- a control unit (101) configured to activate and deactivate an indoor alarm signal and powered by a system selected from the group consisting of: a cigarette lighter in the car; a battery; a solar panel installed on the car;
- A first detection device (102) placed on a child car seat (104) configured to detect the presence of a child in the car and to send a first signal of the presence of the child on the child car seat (104) to the control unit (101); and
- a second detection device (103) configured to detect the presence of a driver and to send a second signal of the presence of the driver from the second detection device (103) to the control unit (101);
**characterized in that** the control unit (101) is provided with a light indicator which is activated in the event of a malfunction of the cigarette lighter.

2. A car anti-abandonment system (100) according to claim 1, **characterized in that** the first detection device (102) is a cushion provided with a plurality of sensors for detecting the presence of a child in the child car seat (104), selected in the group consisting of:
- weight sensors;
- body heat detectors;
- ultrasound detectors.

3. A car anti-abandonment system (100) according to claim 1, **characterized in that** the second detection device (103) is a hook for a seat belt equipped with a plurality of sensors, an anchorage compartment (105) for the attachment of a safety belt (107) of the car, and a closing tab (106) that can be coupled to a car anchoring system (108) .

4. A car anti-abandonment system (100) according to claim 1, **characterized in that** the second detection device (103) is a cushion equipped with sensors and positioned on the driver's seat.

5. A car anti-abandonment system (100) according to claim 1, **characterized in that** it comprises a digital timer (111) connected to the control unit (101), configured to send a signal exceeding a time interval Δt, starting from the instant of activation of the internal alarm signal, to the control unit (101) for the activation of an outdoor alarm signal.

6. A car anti-abandonment system (100) according to claim 5, **characterized in that** the outdoor alarm signal consists of an alarm signal emitted by an alarm system installed in the car.

7. A car anti-abandonment system (100) according to claim 5, **characterized in that** the digital timer (111) is equipped with a communication system for sending emergency requests to phone numbers appropriately pre-configured after the preset time Δt.

8. A car anti-abandonment system (100) according to claim 5, **characterized in that** the digital timer (111) is configured to activate a led installed on the solar panel for warning, after the time interval Δt.
